(19) **Europäisches Patentamt / European Patent Office / Office européen des brevets**

(11) **EP 1 797 416 B1**

(12) **EUROPEAN PATENT SPECIFICATION**

(45) Date of publication and mention
of the grant of the patent:
**29.04.2009 Bulletin 2009/18**

(51) Int Cl.:
***G01N 25/72*** (2006.01)

(21) Application number: **04765791.1**

(86) International application number:
**PCT/EP2004/011056**

(22) Date of filing: **04.10.2004**

(87) International publication number:
**WO 2006/037359 (13.04.2006 Gazette 2006/15)**

(54) **METHOD FOR DETERMINING MATERIAL PARAMETERS OF AN OBJECT FROM TEMPERATURE-VERSUS-TIME (T - T) DATA**

VERFAHREN ZUR BESTIMMUNG VON MATERIALPARAMETERN EINES OBJEKTS VON TEMPERATURE-VERSUS-TIME-DATEN

PROCEDE POUR DETERMINER DES PARAMETRES MATERIELS D'UN OBJET A PARTIR DE DONNEES TEMPERATURE-CONTRE-TEMPS

(84) Designated Contracting States:
**CH DE GB IT LI**

(43) Date of publication of application:
**20.06.2007 Bulletin 2007/25**

(60) Divisional application:
**07015629.4 / 1 852 697**

(73) Proprietor: **SIEMENS AKTIENGESELLSCHAFT**
**80333 München (DE)**

(72) Inventors:
• **BAUMANN, Joachim**
**81925 München (DE)**
• **GOLDAMMER, Matthias**
**80799 München (DE)**
• **HEINRICH, Werner**
**16727 Bärenklau (DE)**

(56) References cited:
**WO-A-98/05949          WO-A-02/089042**
**US-A1- 2002 044 679**

• **GOLDAMMER M ET AL: "Analytical modeling of flash thermography: results for a layered sample" PROCEEDINGS OF THE SPIE - THE INTERNATIONAL SOCIETY FOR OPTICAL ENGINEERING SPIE-INT. SOC. OPT. ENG USA, vol. 4703, 2002, pages 211-218, XP002331899 ISSN: 0277-786X**
• **BALAGEAS D L ET AL: "Pulsed photothermal modeling of layered materials" JOURNAL OF APPLIED PHYSICS USA, vol. 59, no. 2, 15 January 1986 (1986-01-15), pages 348-357, XP002331841 ISSN: 0021-8979 cited in the application**
• **PATENT ABSTRACTS OF JAPAN vol. 2000, no. 19, 5 June 2001 (2001-06-05) & JP 2001 050921 A (CONSTEC ENGI CO), 23 February 2001 (2001-02-23)**

**Description**

BACKGROUND OF THE INVENTION

FIELD OF THE INVENTION

The present invention relates to a method for determining material parameters of an object from temperature-versus-time (T-t) data measured with thermography and to a method for determining material parameters of an object comprising a first layer or uppermost layer, e.g. a coating of a turbine blade, and at least a second layer, e.g. the base material of the turbine blade, or a second coating layer of the turbine blade.

The present invention further relates to a method for analyzing temperature-versus-time (T-t) data of a surface of an object in a thermography testing method and to a method for determining at least one material parameter of an object by thermography.

DESCRIPTION OF THE RELATED ART

A system for active thermography comprises a heating or cooling device and a device to monitor the surface temperature. As a non-destructive testing technique, thermography can be used to detect defects in a tested object or to determine parameters of the object such as coating thickness or heat conductivity utilizing the heat flow within the object under test induced by the heating/cooling device.

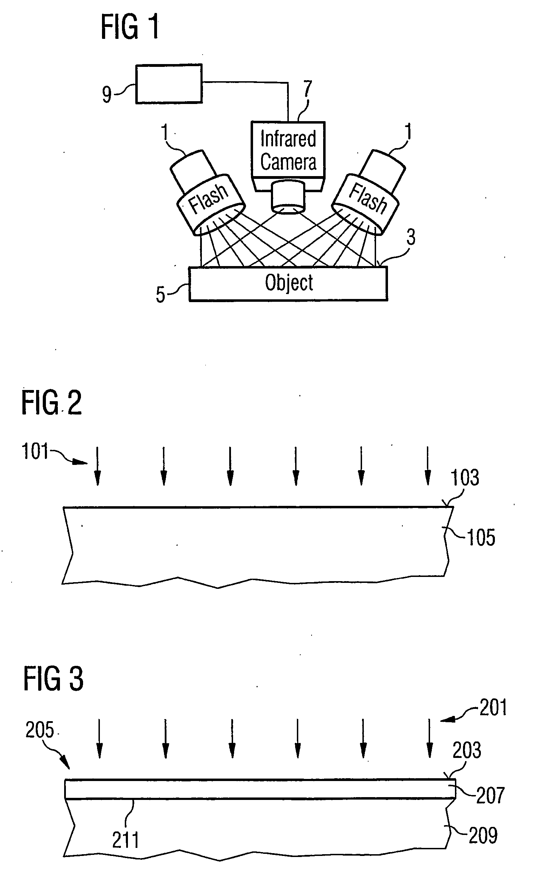

A common incorporation of a thermography method uses one or more flash lamps 1 as one or more heating devices to ignite a heat pulse on the surface 3 of a object 5 (fig. 1). Due to the heat conduction, the pulse travels into the object 5 depending on the structure and the material properties of the object 5. The heat conduction therefore causes a steady decrease of the surface temperature. The time structure of the surface temperature depends on one hand on the time structure of the flash and on the other hand on the thermal material properties as well as the geometric structure of the object 5. A defect in the object, such as a debond of a coating, induces a change in the time-development of the surface temperature which can be seen as deviation from the time-development of the surface temperature of a defect free part in a sequence of infrared images. Further, changes in the material parameters, such as a different heat conductivity of a coating and the base material, influence the time behavior of the surface temperature. Any interface within the object leads to a deviation from the simple case as it is given by an infinitive thick homogeneous object.

Up to now, flash thermography is used for localizing defects, e.g. debonds of coatings (WO98/05949). In addition, layer thickness measurements or defect depth gauging have also been demonstrated using this technique (U.S. 6,394,646). Further, numerical techniques for improving the quality of thermal images have been described (U.S. 2002/044679). For thermography with periodic excitation, so called "lock-in-thermography", a method for extracting two or more parameters from one measurement has been described (WO 00/11450).

As already mentioned, the time structure of the surface temperature after the flash does not only depend on the material properties and the geometric structure of the object but also on the time structure of the flash. For thin coatings or defects close to the surface, the deviation of the time-development of the surface temperature from the time-development of a defect free part due to the defect or a property change of the material occurs shortly after the excitation by the flash. High-speed infrared cameras 7 can be used in measurements designed to measure such inner structures close to the surface. However the maximum useable speed is limited by the finite duration of the flash, which leads to distorted time-temperature when compared to an infinitely short flash pulse.

A common approach to solve the problem connected with the time structure of the flash is to compare the data to a calculated curve that includes the finite duration of the flash excitation (H.I. Ringermacher, D.J. Mayton, and D.R. Howard, "Towards a flat-bottom hole standard", Review of Progress in Quantitative Nondestructive Evaluation 17 pp. 425-429 (1998) and U.S. 6,367,969. Also, special filtering techniques in addition to common filters such as Perspex or water filters have been described to cut off slow decaying parts of the spectrum of the flash and to thereby reduce the distortion originating from the finite flash duration (U.S. 6,394,646).

Regarding the above, there is a need for an improved method for determining material parameters of an object from thermography. Further, there is a need for an improved method of analyzing thermography data, by which structures of an object close to the surface can be measured.

SUMMARY OF THE INVENTION

According to the present invention, there is provided a method for determining material parameters of an object from temperature-versus-time (T-t) data, where t is the time that has elapsed since the flash heating and T is the temperature of the object's surface at the time t relative to a temperature before the excitation, in which the temperature-versus-time data is measured by thermography. The inventive method comprises the steps of:

- establishing ln(T)-versus-ln(t) data from the T-t data. The ln(T)-versus-ln(t) data can either be established by calculation, namely by calculating ln(T) and ln(t) from T and t, respectively, or graphically by plotting T against t in a graph with the T-axis and the t-axis both scaled logarithmically;
- analyzing the ln(T)-versus-ln(t) data; and
- determining at least two material parameters based on the result of the analysis.

The invented method uses, in general, the fact that more than one material parameter (a material property or a geometric information) could be extracted from the flash thermography data. The invention describes a method for extracting more than one parameter from the time development of the surface temperature. By extracting additional parameters from a single thermography-measurement the time needed to test an object is greatly reduced compared to the methods in the state of the art because the number of measurements for completely testing the object can be reduced.

In particular, analyzing the ln(T)-versus-ln(t) data may comprise the step of determining the times of occurrence of at least two inflection points in the ln(T)-versus-ln(t) data. Then the at least two material parameters are determined based on the knowledge of the times of occurrence of the at least two inflection points. This does not mean that the determination of the parameters must be based on the values of the times of occurrence itself. It is e.g. also possible to determine at least one of the parameters from characteristics of the ln(T)-versus-ln(t) data which are present in an interval given by the times of occurrence of at least two inflection points.

Determining the times of occurrence of the at least two inflection points in the ln(T)-versus-ln(t) data can either be done by searching for extrema in the second derivative of the ln(T)-versus-ln(t) data or by calculating the intersections of straight lines fitted to the ln(T)-versus-ln(t) data.

Another possibility would be to search for steps in the first derivative of the ln(T)-versus ln(t) data or by looking at the difference of the measured curve to known curve or a measured reference material.

As the at least two parameters a thermal thickness $\mu_{th}$ of the object and the thermal reflectivity R of the object can be determined. The thermal thickness $\mu_{th}$ of an object is defined by the ratio of its geometrical thickness d and the square root of its thermal diffusivity $\alpha$. The thermal diffusivity $\alpha$ of a material is given by its thermal conductivity $\lambda$ divided by its material density $\rho$ and by its heat capacity per mass c. The thermal reflectivity R is defined by the ratio of the thermal effusivities $e_1$, $e_2$ of neighboring layers, i.e. $R = (e_2-e_1)/(e_2+e_1)$, where the thermal effusivity e is defined by the square root of a material's thermal conductivity $\lambda$ times the square root of the material's density $\rho$ times the square root of the materials heat capacity per mass c.

In particular, the thermal thickness $\mu_{th}$ can be determined from the time of occurrence of an inflection point.

The thermal reflectivity R can be determined from the time difference between the times of occurrence of two inflection points following each other. Alternatively, the thermal reflectivity can be determined from the slope of the ln(T)-versus-ln(t) data between the times of occurrence of two inflection points following each other. Further alternatively, the thermal reflectivity can be determined in the following way:

- fitting the ln(T)-versus-ln(t)-data which lies before the time of occurrence of a first inflection point with a linear polynomial, such as ln(T) = ln(A) - 1/2 ln(t), and determining the value of ln(A);
- fitting the ln(T)-versus-ln(t) data which lies after the time of occurrence of the inflection point following the first inflection point with a linear polynomial, such as ln(T) = ln(B) - 1/2 ln(T), and determining the value of ln(B); and
- determining the thermal reflectivity from the values of ln (A) and ln (B) .

The described method is, e.g. applicable for determining at least two material parameters of a turbine member.

In a further development, the time of occurrence of a third inflection point is determined, and the thermal thickness of the second layer is determined based on the time of occurrence of the third inflection point. By the described development it is e.g. possible to determine the thickness of a thermal barrier coating and an underlying MCrAlY-coating which is a coating made of a metallic alloy which comprises chromium (Cr) and aluminum (Al) and in which Y stands for Yttrium or an other rare earth element and M stand for a further metal like iron (Fe), cobalt (Co) or nickel (Ni), as well as the thermal reflectivity R at the boundary between the two coating layers.

From the thermal thickness and the thermal reflectivity, related parameters can be calculated. Examples for such related parameters are: layer thickness, thermal diffusivity, or layer porosity.

Additional features, properties and advantages of the present invention will become apparent by the following detailed description of embodiments of the present invention with reference to the accompanying drawings.

BRIEF DESCRIPTION OF THE DRAWINGS

Fig. 1 shows schematically a thermography system.

Fig. 2 shows schematically a flash excitation of an homogeneous object of finite thickness.

Fig. 3 shows schematically a flash excitation of an object comprising two layers.

Fig. 4 shows the development of a surface temperature after flash heating the surface as a function of time in a double-logarithmic graph.

Fig. 5 shows a time-resolved intensity of a flash lamp.

DETAILED DESCRIPTION OF THE PREFERRED EMBODIMENTS

A typical set-up for a flash thermography measurement is shown in Fig. 1. The set-up comprises two flash lamps 1 as a heating device for flash heating the surface 3 of an object 5 under test. Although two flash lamps 1 are present in Fig. 1, only one flash lamp 1 or more than two flash lamps 1 could be present as well. The duration of the flash heating lies in the range of a few milliseconds, in particular in the range between 1 and 3 milliseconds. The surface temperature after the flash heating is measured by as an infrared imaging device 7 which comprises a infrared detector and which uses a lens for imaging the surface 3 of the object 5 under test onto the detector. In the present example, the infrared imaging device 7 is an infrared camera.

The main part of the infrared-camera 7, i.e. of the infrared-imaging device, is the infrared detector which could be either a single point detector, a line detector or a scanning system (single point or line). However, in most applications a starring focal plane array detector would be used. As the surface 3 of the object 5 under test is imaged onto the detector, the readout of a certain position on the detector corresponds to a certain position on the object's surface. While a single point detector can only detect the temperature of a single position of the surface infrared cameras 7 generally use scanning techniques or starring arrays to measure the temperature of a number of positions of the object's surface simultaneously over a larger area of the surface 3.

The infrared camera 7 is part of a thermal imaging system used to record the time development of the surface temperature by measuring the infrared intensity radiated from surface 3. The thermal imaging system further comprises a readout system 9 such as e.g. a computer for reading out the infrared detector. For each detector position of a scanning system or for each element of a starring array, the time development of the temperature is recorded so as to obtain a specially resolved surface temperature distribution of the object 5 under test.

The time development of the surface temperature after the excitation by the flash lamps 1 depends on the material properties as well as on the geometry of the object 5. The simplest case is the one-dimensional heat flux in a homogeneous material of large thickness (Fig. 2) and corresponding large lateral dimensions, a so called semi-infinite object 105. In the semi-infinite object 105, the decrease of the surface temperature after flash excitation 101 follows the equation:

$$\Delta T \propto \frac{1}{\sqrt{t - t_{flash}}} \qquad (1)$$

where $\Delta T$ is the temperature increase relative to the temperature before the flash excitation and $t_{flash}$ is the excitation time, i.e. the time at which the excitation took place. In a double-logarithmic graph equation (1) yields a straight line with a slope of -1/2.

In difference to the case of the semi-infinite object 105 the finite thickness of a real object results in deviations of the half-infinite case. A real object 205 is schematically shown in Fig. 3. The real object 205 comprises a first layer 207, e.g. a coating, and a second layer 209 which is further referred to as the substrate 209 and which could e.g. be the base material of the object 205 or another coating layer. The surface 203 of the object 205 is formed by the outer surface of the first layer 207. The other surface of the first layer forms an interface 211 to the substrate 209.

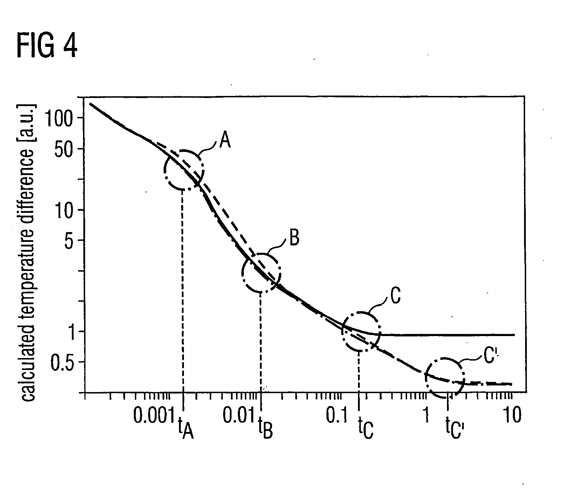

The deviations from the semi-infinite case which can be seen in the double-logarithmic graph when measuring an object as shown in Fig. 3 and a method for deriving material parameters from T-t data will now be described with reference to Fig. 4. Fig. 4 shows the calculated temperature of the surface 203 as a function of the time that has elapsed since the flash excitation 201 of the surface 203 for three different objects 205 each having a first layer 207 and a substrate 209. The solid line represents a metal substrate of 1 millimeter thickness which is covered by a 30 micrometer ceramic coating. The dashed line represents a metal substrate of 3 millimeter thickness which is covered by a 30 micrometer ceramic coating. Finally, the dash-dotted line represents a metal substrate of 3 millimeter thickness covered by 36 micrometer ceramic coating.

In all three cases shown in Fig. 4, a short time after the flash excitation 201, i.e. before a certain time $t_A$ has elapsed since the excitation, the heat does not penetrate the first layer 207 deep enough to reach the interface 211 and, as a consequence, the change in temperature follows equation (1) for $t < t_A$. Then, after the certain time $t_A$ has elapsed since the excitation, the heat flow reaches the interface 211 and the temperature change deviates from the semi-infinite case. The certain time $t_A$ depends on the thickness and the thermal diffusivity of the first layer 207. The sign of the deviation from the curve given by equation (1) is determined by the thermal reflection coefficient R, which corresponds to the ratio $(e_2-e_1)/(e_2+e_1)$ of the thermal effusivities of the first layer 207 ($e_1$) and the substrate 209 ($e_2$). In the examples shown in Fig. 4 the thermal effusivity increases at the interface 211 which results in faster temperature decrease as compared to the semi-infinite case.

For a time $t_B$ sufficiently larger than the time $t_A$, a second inflection point B can be seen. The reason is that the temperature gradient in the first layer 207 is now negligible and, therefore, the decreasing of the surface temperature originates mainly from heat flux in the substrate 209. The heat flux in the substrate 209, however, yields a behavior of the surface temperature close to equation 1, i.e. a straight line with slope -1/2, for $t > t_B$ but with a different constant of proportionality as compared to the straight line for the heat flux in the first layer 207, i.e. the straight line for $t < t_A$. In the double logarithmic plot such a difference in the constant of proportionality leads to an off-set of the straight line with slope -1/2 after $t_B$ relative to the straight line with slope -1/2 before $t_A$.

The time difference between the first inflection point A and the second inflection point B as well as the difference in the constant of proportionality for $t < t_A$ and $t > t_B$ corresponds to the thermal reflection coefficient R. As a consequence, the thermal reflectivity can be determined from the time difference between the times $t_A$ and $t_B$. Alternatively, the thermal reflection coefficient R can be determined from the difference in the constant of proportionality of the straight lines for $t < t_A$ and $t > t_B$. As a further alternative, the slope of the T-t curve in the logarithmic plot between the first two inflection points, i.e. in the range of $t_A < t < t_B$ may be used to extract the thermal reflectivity.

As can be seen in the graph shown in Fig. 4 changing thickness of the first layer 207 shifts both inflection points A and B. A change in the thermal diffusivity of the first layer 207 or a change in the thermal effusivity would lead to a similar result.

For an object 205 with a thin first layer 207 on a thick substrate 205, a third inflection point C can be seen. The third inflection point C occurs when the heat pulse reaches the next interface, which is the back side of the substrate 109. The position of the third inflection point C shifts with the thickness or thermal diffusivity of the substrate 209 and can be used to calculate the thermal thickness $\mu_{th}$ of the substrate 209. As the thermal thickness $\mu_{th}$ is the ratio of the substrate's geometrical thickness and the square root of its thermal diffusivity, either one of these parameters can be determined if the other one is known otherwise.

In summary, for a two-layer-object, such as e.g. the object 205 which comprises a first layer 207 and a substrate 209 as second layer, in total three parameters can be extracted from the positions of three inflection points A, B, C: The thermal thickness $\mu_{th}$ of the first layer; the thermal reflectivity coefficient R, which is given by the ratio of the thermal effusivities of the two layers; and the thermal thickness $\mu_{th}$ of the second layer. These parameters could then be used to determine material properties, such as e.g. porosity, which correlate to the thermal properties and can be determined from them by e.g. a calibration table.

If the signal to noise ratio of the measurement is not good enough to resolve the third inflection point C in the $\ln(T)$-$\ln(t)$-data, only the thermal thickness $\mu_{th}$ of the first layer and the thermal reflectivity coefficient R could be extracted. For a system comprising more than two layers, additional inflection points would occur which could, in principle, be used to extract even more than three parameters. However, due to the time and/or temperature resolution of the infrared detectors available today these detectors are in most cases not capable of resolving more than three inflection points. Improved infrared detectors may be available for a reasonable price in the future. Such improved infrared detectors may resolve further inflection points for systems comprising more than two layers.

For an object 205 in which the thermal thickness $\mu_{th}$ of the substrate 209 is not sufficiently larger than the thermal thickness $\mu_{th}$ of the first layer 207, the inflection point originating from the back side of the second layer, i.e. the third inflection point C, could mask the second inflection point B originating from the interface 211 between the first layer 207 and the substrate 209. In this case, the position $t_A$ of the first inflection point A, the position $t_c$ or $t_c$, of the last inflection point C and the slope of the curve for $t > t_A$ could be used to extract the above mentioned parameters if the signal to noise ratio is sufficiently high.

The described properties of a multi-layer object lead to the following procedure for extracting parameters from T-t data resulting from an active thermographic measurement:

After flash heating 201 of the object 205 under test, the surface temperature for a single spot or an area of object 205 under test is recorded as a function of time. Outgoing from the recorded temperature-versus-time (T-t) data the logarithm of the time and the logarithm of the temperature is calculated in order to establish $\ln(T)$-versus-$\ln(t)$-data from the T-t data. Alternatively, to establish the $\ln(T)$-versus-$\ln(t)$-data the T-t data could be plotted in a double logarithmic graph, i.e. a graph with both axis scaled logarithmically. Then, the positions $t_A$, $t_B$, ... of the inflection points A, B, ... in the ln(T)-versus-ln(t) data are determined either by calculation or graphically from the plotted T-t data. Calculating the positions $t_A$, $t_B$, ... of the inflection points can be e.g. done by searching for local extrema in the second derivative of the ln(T)-versus-ln(t) data or steps in the first derivative. Determining positions $t_A$ $t_B$, ... could also be done by finding intersections of straight lines which are fitted (numerically or graphically) to the ln(T)-versus-ln(t) data. For example, a straight line would be fitted to the curve for $t < t_A$ and another straight line would be fitted to the curve for $t_A < t < t_B$. Then, the intersection between both straight lines would yield the time $t_A$ at which the first inflection point A occurs.

The time $t_A$ at which the first inflection point A occurs can be used to calculate the thermal thickness $\mu_{th}$ of the first layer 207 or, in case the object is a homogeneous object, the only layer. The thermal thickness $\mu_{th}$ of the first layer 207 can be converted either to its geometrical thickness $d_1$ if its thermal diffusivity $\alpha_1$ is known otherwise or to its thermal diffusivity $\alpha_1$ if its geometrical thickness $d_1$ is known otherwise. The time $t_A$ at which the first inflection A point occurs depends on the material properties of the first layer 207 according to:

$$t_A = p_1 \frac{d_1^2}{\alpha_1} \qquad\qquad (2)$$

The constant of proportionality $P_1$ depends on the specific approach to extract the time $t_A$ from the data. Equation (2) is valid for the one-dimensional case, deviations occur for thick layers.

Another possibility to calculate material properties from the times $t_A$, $t_B$, ... at which the inflection points A, B, ... occur is to use a calibration table which links the times $t_A$, $t_B$, ... to material properties.

For a layered object with a second layer of a sufficient thermal thickness, e.g. a substrate 209, the time difference $\Delta t_{AB} = t_B - t_A$ between the times $t_A$ and $t_B$ at which the first and second inflection points A, B, respectively, occur corresponds to the thermal reflectivity coefficient R. Therefore, the thermal reflectivity coefficient R can be determined from $\Delta t_{AB}$.

Alternatively, fitting straight lines based on equation 1 to the curve for $t < t_A$ and for $t < t_B$ allows for determining the constants of proportionality in the respective part of the curve. From the constants of proportionality, the thermal reflectivity coefficient R can be determined, too.

As a further alternative, the slope of the curve between the first and second inflection point, i.e. for $t_A < t < t_B$, can be determined. The slope also contains information about the thermal reflectivity coefficient R and can therefore be used to extract the thermal reflectivity coefficient R from the ln(T)-versus-ln(t) data.

Any of the three mentioned methods described above can be used to determine the thermal reflectivity coefficient R at the interface between the two layers by using calibration tables or model calculations as they are described in D.L. Balageas, J.C. Krapez, and P. Cielo, "Pulsed photothermal modeling of layered materials", Journal of Applied Physics 59, pp. 348 - 357 (1986) and J. Baumann and R. Tilgner, "Photothermal examination of buried layers", Canadian Journal Physics 64, pp. 1291-1292 (1986). Both documents are therefore incorporated into the present specification by reference.

The third inflection C point (and any further inflection point) yields the same information on the second layer 209 (or the respective further layer) of the object 205 as the first inflection point A yields on the first layer 207. Accordingly, equation 2 can be applied for extracting material properties of the second layer 209 (or the respective further layer). Alternatively the use of a calibration table is possible.

The thermal reflectivity coefficient R and the thermal thickness $\mu_{th}$ of the layers can be converted to related parameters. For example, the thickness d and porosity of the first layer 207, e.g. a coating, could be calculated if the relation between the thermal parameters and the porosity are known in advance from calibration measurements. The knowledge about thickness and porosity of e.g. a coating is of importance for testing coated turbine members like turbine blades. Therefore, the described method of extracting more than one parameter from an active thermographic measurement is in particular useful in a method for testing coated turbine members.

It is possible to extract more than a single parameter from a thermographic measurement by using the described method. Additional parameters can be extracted without performing additional measurements resulting in an additional information at no or very low additional costs. With increased time or temperature resolution of future thermal imaging systems, the number of parameters which could be extracted from a single measurement will even increase.

In an Object 205, a defect which represents a significant change of the material properties, such as a debond of the first layer 207, may occur. The additional air layer in the debonding region constitutes a significant change in the thermal properties leading to a different time-temperature curve as compared to a non-defective layer bonding. With the inventive method, an already performed debond inspection for the first layer 207, e.g. for a ceramic coating of a turbine blade, could at the same time be used for acquiring information about the porosity or thickness of the first layer 207, e.g. the ceramic coating of the turbine blade.

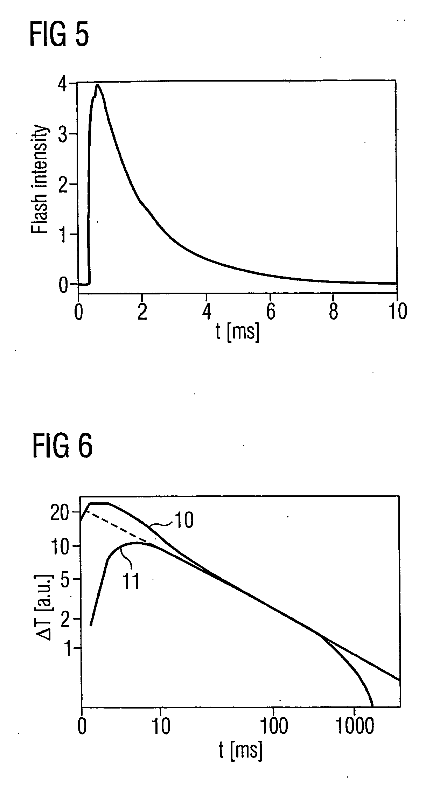

For a non-defective object as well as for a defective object, a distortion of the signal which originates from a finite flash duration complicates the data analysis. Fig. 5 shows a measurement of the flash intensity of a typical flash lamp 1 used in thermography applications. The flash intensity I is shown as a function of the time that has elapsed since ignition of the flash. A Perspex filter was used to reduce the radiation from the lamps in the infrared region - only the visible spectrum is used for heating. After ignition, the flash intensity dies out exponentially over several milliseconds. Modern infrared cameras are capable of recording image sequences with a frame rate up to several kHz.

Fig. 6 shows, as functions of time, the measured surface temperature of an object 5 under test (curve 10) after the excitation by a flash as shown in Fig. 5 and the temperature calculated for the same object 5 by equation (1) (dotted line) in a double logarithmic graph. As the object under test, a rectangular thick slap of quartz which was blackened on one side was used to separate the effect of the flash from any material properties.

The measured curve 10 follows the dotted curve given by equation (1) closely for t > 30 milliseconds. However, for a short time after ignition of the flash, curve 10 of the measured data deviates from the dotted curve due to the finite duration of the flash because the measured data is convoluted with the flash intensity profile shown in Fig. 5. It has been found by the inventors that a deconvolution procedure which provides the un-convoluted time-temperature curve for the sample can improve the analysis of the measured data.

The following deconvolution procedure which is not part of the invention as defined by the claims can be used to calculate a less distorted time-temperature curve:

1. Measuring the time-development of the flash-intensity in a visible spectrum using e.g. a photo diode. If the duration of the flash profile measurement does not match the duration of the thermographic measurement the set of data measured for the flash profile is extended to the duration of the thermographic measurement using a zero value for the intensity.

2. Determining the center of gravity of the flash intensity profile. The value $t_{flash}$ of the center of gravity represents the time at which an infinite short flash would have been ignited.

3. Fourier-transforming the flash intensity profile.

4. Establishing the temperature-versus-time (T-t) data for each pixel of the sequence of images measured with the thermal imaging system.

5. Fourier-transforming each generated T-t data.

6. Dividing the Fourier-transformed T-t data by the Fourier-transformed flash intensity profile in order to obtain quotient T-t data.

7. Using the center of gravity determined in step 2 for correcting the phase of the quotient T-t data according to the shifting theorem of Fourier-transformation by multiplying with exp $(2\pi \, i \, f \, t_{flash})$ where f stands for the frequency and where $i^2 = -1$.

The result of the deconvolution procedure is shown in Fig. 6 as curve 11. This curve follows the ideal curve (dotted line) over a large range extending to earlier times compared to the curve 10 representing the measured data before performing the deconvolution procedure.

In Fig. 6, the deconvoluted curve 11 deviates from the originally measured curve 10 as well as from the ideal curve for t > 800 milliseconds. This is an artifact caused by the Fourier-transformation that is used in the procedure. The solution for this problem could either be a longer measurement time or switching to the original T-t data for larger times.

The use of deconvolution to correct for distortions originating from the finite flash duration before using the data for further processing allows for using modern high-speed infrared cameras to measure material parameters of thin coatings or to measure the depth of defects which are located close to the surface of an object. Measuring such features, without the deconvolution procedure, would require using a flash with shorter duration in order to overcome the problems connected to duration of the flash. The shorter duration would in turn result either in a lower flash intensity or in the necessity of additional bulky flash tubes. With the proposed deconvolution procedure, no flash intensity has to be sacrificed in order to measure material parameters of thin structures or defects located close to the surface of an object with a flash thermography system.

The described deconvolution procedure can advantageously be used in non-destructive testing methods for turbine members such as e.g. coated turbine blades as well as in methods for determining material properties of turbine members such as e.g. turbine blades. For determining material properties or for detecting defects, the turbine member can be placed as the object 5 under test into the thermography system shown in Fig. 1. Then, a flash is ignited to generate a heating pulse rapidly heating the surface of the turbine member. After ignition, the temperature of the surface of the turbine member is measured as a function of the time that has lapsed since the ignition of the flash. In addition, the intensity of the flash is measured as a function of the time that has elapsed since the ignition of the flash, too. The measured T-t data are deconvoluted with the measured intensity data according to the above described deconvolution procedure. After performing the deconvolution procedure, thermal parameters from which the material properties can be derived or which can be used in detecting defects, are determined by using the deconvoluted data. Material parameters that can be derived are e.g. layer thickness, thermal diffusivity, porosity of the material, etc.

The method for extracting more than one material parameter from measured T-t data as described above will be in particular applicable to data which has been deconvoluted according to the described deconvolution procedure. However, the data derived by the deconvolution procedure can also be further processed by conventional procedures for determining material properties or detecting defects as they are described in the state of the art.

**Claims**

1. A method for determining material parameters of an object (5, 205) comprising a first layer (207), at least a second layer (209), and an interface (211) between the first layer (207) and the second layer (209) from temperature-versus-time (T-t) data measured with thermography, comprising the steps of:

    - establishing ln(T)-versus-ln(t) data from the T-t data;
    - determining the times of occurrence of at least two inflection points (A, B) in the ln(T)-versus-ln(t) data;
    - determining at least the thermal thickness of the first layer (207) and the thermal reflectivity at the interface (211) between the first (207) and the second layer (209) based on the times of occurrence of the inflection points (A, B).

2. The method of claim 1 wherein
   the times of occurrence of the at least two inflection points (A, B) in the ln(T)-versus-ln(t) data are determined by searching for extrema in the second derivative of the ln(T)-versus-ln(t) data.

3. The method of claim 1 wherein
   the times of occurrence of the at least two inflection points (A, B) in the ln(T)-versus-ln(t) data are determined by calculating the intersections of straight lines fitted to the ln(T)-versus-ln(t) data.

4. The method of claim 1 wherein
   the thermal thickness is determined from the time of occurrence of an inflection point (A).

5. The method of claim 1 wherein
   the thermal reflectivity is determined from the time difference between the times of occurrence of two inflection points (A, B) following each other.

6. The method of claim 1 wherein
   the thermal reflectivity is determined from the slope of the ln(T)-versus-ln(t) data between the times of occurrence of two inflection points (A, B) following each other.

7. The method of claim 1 wherein
   the thermal reflectivity is determined in the following way:

    - fitting the ln(T)-versus-ln(t) data which lies before the time of occurrence of a first inflection point (A) with a linear polynomial ln(T) = ln(A) - -1/2 ln(t) and determining the value of ln(A);
    - fitting the ln(T)-versus-ln(t) data which lies after the time of occurrence of the inflection point (B) following the first inflection point (A) with a linear polynomial ln(T) = ln(B) - -1/2 ln(T) and determining the value of ln (B) ; and
    - determining the thermal reflectivity from the values of ln(A) and ln(B).

8. The method of claim 1 wherein
   at least two material parameters of a turbine member is determined.

9. The method of claim 1 wherein
   the time of occurrence of a third inflection point (C) is determined, and in which the thermal thickness of the second layer (209) is determined based on the time of occurrence of the third inflection point (C).

10. The method of claim 1 wherein
the thermal thickness and the thermal reflectivity are used to calculate related parameters.

11. The method of claim 1 wherein
the related parameters are chosen among the following parameters: thickness, thermal diffusivity, porosity, and density.

12. The method of claim 1 wherein
the object (5, 205) is a coated turbine member comprising a coating layer as first layer (207) and a base material or a second coating layer as second layer (209), and in which at least the thermal thickness of the coating layer and the thermal reflectivity at the interface between the coating layer (207) and the base material or the second coating layer (209) are determined.

**Patentansprüche**

1. Verfahren zum Bestimmen von Materialparametern eines Objekts aus über Thermographie gemessenen Temperatur-Zeit-Daten (T-t), umfassend die folgenden Schritte:

   - Festlegen von ln(T)-ln(t)-Daten aus den T-t-Daten;
   - Analysieren der ln(T) -ln (t)-Daten und
   - Bestimmen von mindestens zwei Materialparametern auf der Basis des Ergebnisses der Analyse, wobei

   die Analyse der ln(T) -ln(t) -Daten das Bestimmen der Eintrittszeiten von mindestens zwei Wendepunkten in den ln(T)-ln(t)-Daten umfasst und wobei die mindestens zwei Materialparameter auf der Basis der Kenntnis der Eintrittszeiten von mindestens zwei Wendepunkten bestimmt werden, wobei
   einer der mindestens zwei Parameter eine thermische Dicke des Objekts ist und ein anderer das thermische Reflexionsvermögen des Objekts ist.

2. Verfahren nach Anspruch 1, wobei
die Eintrittszeiten der mindestens zwei Wendepunkte in den ln(T)-ln(t) -Daten durch Suchen nach Extremstellen in der zweiten Ableitung der ln(T)-ln(t)-Daten bestimmt werden.

3. Verfahren nach Anspruch 1, wobei
die Eintrittszeiten der mindestens zwei Wendepunkte in den ln(T)-ln(t)-Daten durch Berechnen der Schnittpunkte von an die ln(T)-ln(t)-Daten angepassten Geraden bestimmt werden.

4. Verfahren nach Anspruch 1, wobei
die thermische Dicke anhand der Eintrittszeit eines Wendepunkts bestimmt wird.

5. Verfahren nach Anspruch 1, wobei
das thermische Reflexionsvermögen anhand der Zeitdifferenz zwischen den Eintrittszeiten von zwei aufeinanderfolgenden Wendepunkten bestimmt wird.

6. Verfahren nach Anspruch 1, wobei
das thermische Reflexionsvermögen anhand der Steigung der ln(T)-ln(t) -Daten zwischen den Eintrittszeiten von zwei aufeinanderfolgenden Wendepunkten bestimmt wird.

7. Verfahren nach Anspruch 1, wobei
das thermische Reflexionsvermögen auf die folgende Weise bestimmt wird:

   - Anpassen der ln(T)-ln(t)-Daten, die vor der Eintrittszeit eines ersten Wendepunkts mit einem linearen Polynom ln(T) = ln(A) - -1/2 ln(t) liegen, und Bestimmen des Werts von ln(A);
   - Anpassen der ln(T)-ln(t)-Daten, die nach der Eintrittszeit des auf den ersten Wendepunkt folgenden Wendepunkts mit einem linearen Polynom ln(T) = ln(B) - -1/2 ln(t) liegen, und Bestimmen des Werts von ln(B) und
   - Bestimmen des thermischen Reflexionsvermögens anhand der Werte von ln(A) und ln(B).

**8.** Verfahren nach Anspruch 1, wobei
mindestens zwei Materialparameter eines Turbinenelements bestimmt werden.

**9.** Verfahren zum Bestimmen von Materialparametern eines Objekts, umfassend eine erste Schicht, mindestens eine zweite Schicht und eine Grenzfläche zwischen der ersten und der zweiten Schicht anhand von über Thermographie gemessenen Temperatur-Zeit-Daten (T-t), umfassend die folgenden Schritte:

- Festlegen von ln(T)-ln(t)-Daten aus den T-t-Daten;
- Bestimmen der Eintrittszeiten von mindestens zwei Wendepunkten in den ln(T)-ln(t)-Daten;
- Bestimmen mindestens der thermischen Dicke der ersten Schicht und des thermischen Reflexionsvermögens an der Grenzfläche zwischen der ersten und der zweiten Schicht auf der Basis der Eintrittszeiten der Wendepunkte.

**10.** Verfahren nach Anspruch 9, wobei
der Eintrittspunkt eines dritten Wendepunkts bestimmt wird und wobei die thermische Dicke der zweiten Schicht auf der Basis der Eintrittszeit des dritten Wendepunkts bestimmt wird.

**11.** Verfahren nach Anspruch 9, wobei
die thermische Dicke und das thermische Reflexionsvermögen zum Berechnen von verwandten Parametern verwendet werden.

**12.** Verfahren nach Anspruch 9, wobei
die verwandten Parameter unter den folgenden Parametern gewählt werden: Dicke, Temperaturleitfähigkeit, Porosität und Dichte.

**13.** Verfahren nach Anspruch 9, wobei
das Objekt ein beschichtetes Turbinenelement ist, umfassend eine Beschichtungsschicht als erste Schicht und ein Basismaterial oder eine zweite Beschichtungsschicht als zweite Schicht, und bei dem mindestens die thermische Dicke der Beschichtungsschicht und das thermische Reflexionsvermögen an der Grenzfläche zwischen der Beschichtungsschicht und dem Basismaterial oder der zweiten Beschichtungsschicht bestimmt werden.


**Revendications**

**1.** Procédé de détermination de paramètres de matériau d'un objet à partir de données température en fonction du temps ( T en fonction de t ) mesurées par thermographie comprenant les stades dans lesquels :

- on établit des données log ( T ) en fonction de log ( t ) à partir des données T en fonction de t ;
- on analyse les données log ( T ) en fonction de log ( t ) ; et
- on détermine au moins deux paramètres de matériau sur la base du résultat de l'analyse, dans lequel

l'analyse des données log ( T ) en fonction de log ( t ) comprend la détermination des instants d'apparition d'au moins deux points d'inflexion dans les données log ( T ) en fonction de log ( t ) et dans lequel on détermine les au moins deux paramètres de matériau sur la base de la connaissance des instants d'apparition d'au moins deux points d'inflexion, dans lequel
l'un des au moins deux paramètres est une épaisseur thermique de l'objet et un autre est le facteur de réflexion thermique de l'objet.

**2.** Procédé suivant la revendication 1, dans lequel
on détermine les instants d'apparition des au moins deux points d'inflexion dans les données log ( T ) en fonction de log ( t ) en recherchant des extrema de la dérivée seconde des données log ( T ) en fonction de log ( t ).

**3.** Procédé suivant la revendication 1, dans lequel
on détermine les instants d'apparition des au moins deux points d'inflexion dans les données log ( T ) en fonction de log ( t ) en calculant les intersections de lignes droites ajustées aux données log ( T ) en fonction de log ( t ).

**4.** Procédé suivant la revendication 1, dans lequel
on détermine l'épaisseur thermique à partir de l'instant d'apparition d'un point d'inflexion.

**5.** Procédé suivant la revendication 1, dans lequel
on détermine le facteur de réflexion thermique à partir de la différence dans le temps entre les instants d'apparition de deux points d'inflexion qui se suivent.

**6.** Procédé suivant la revendication 1, dans lequel
on détermine le facteur de réflexion thermique à partir de la pente des données log ( T ) en fonction de log ( t ) entre les instants d'apparition de deux points d'inflexion qui se suivent.

**7.** Procédé suivant la revendication 1, dans lequel
on détermine le facteur de réflexion thermique de la façon suivants :

- on ajuste les données log ( T ) en fonction de log ( t ) qui se trouvent avant l'instant d'apparition d'un premier point d'inflexion par un polynôme linéaire log ( T ) = log ( A ) - -1/2 log ( t ) et on détermine la valeur de log ( A ) ;
- on ajuste les données log ( T ) en fonction de log ( t ) qui se trouvent après l'instant d'apparition d'un premier point d'inflexion par un polynôme linéaire log ( T ) = log ( B ) - -1/2 log ( t ) et on détermine la valeur de log ( B ) ; et
- on détermine le facteur de réflexion thermique à partir des valeurs de log ( A ) et de log ( B ).

**8.** Procédé suivant la revendication 1, dans lequel
on détermine au moins deux paramètres de matériau d'un élément de turbine.

**9.** Procédé de détermination de paramètres de matériaux d'un objet comprenant une première couche, au moins une deuxième couche et une interface entre la première couche et la deuxième couche à partir de données de température en fonction du temps ( T en fonction de t ) mesurées par thermographie comprenant les stades dans lesquels :

- on établit des données log ( T ) en fonction de log ( t ) à partir des données T en fonction de t ;
- on détermine les instants d'apparition d'au moins deux points d'inflexion dans les données log ( T ) en fonction de log ( t ) ;
- on détermine au moins l'épaisseur thermique de la première couche et le facteur de réflexion thermique à l'interface entre la première et la deuxième couche sur la base des instants d'apparition des points d'inflexion.

**10.** Procédé suivant la revendication 9, dans lequel
on détermine l'instant d'apparition d'un troisième point d'inflexion et dans lequel on détermine l'épaisseur thermique de la deuxième couche sur la base de l'instant d'apparition du troisième point d'inflexion.

**11.** Procédé suivant la revendication 9, dans lequel
on utilise l'épaisseur thermique et le facteur de réflexion thermique pour calculer des paramètres apparentés.

**12.** Procédé suivant la revendication 9, dans lequel
les paramètres apparentés sont choisis parmi les paramètres suivants : épaisseur, facteur de diffusion thermique, porosité et masse volumique.

**13.** Procédé suivant la revendication 9, dans lequel
l'objet est un élément de turbine revêtu comprenant une couche de revêtement comme première couche et un matériau de base ou une deuxième couche de revêtement comme deuxième couche et dans lequel on détermine au moins l'épaisseur thermique de la couche de revêtement et le facteur de réflexion thermique à l'interface entre la couche de revêtement et le matériau de base ou la deuxième couche de revêtement.

# FIG 1

9 — [      ]

7 — Infrared Camera

1 — Flash

1 — Flash

3

5 — Object

# FIG 2

101 → ↓ ↓ ↓ ↓ ↓ ↓

103

105

# FIG 3

205

201 →

203

207

209

211

FIG 4

## FIG 5

## FIG 6

**EP 1 797 416 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9805949 A
- US 6394646 B
- US 2002044679 A

- WO 0011450 A
- US 6367969 B

### Non-patent literature cited in the description

- **H.I. RINGERMACHER ; D.J. MAYTON ; D.R. HOWARD.** Towards a flat-bottom hole standard. *Review of Progress in Quantitative Nondestructive Evaluation,* 1998, vol. 17, 425-429

- **D.L. BALAGEAS ; J.C. KRAPEZ ; P. CIELO.** Pulsed photothermal modeling of layered materials. *Journal of Applied Physics,* 1986, vol. 59, 348-357
- **J. BAUMANN ; R. TILGNER.** Photothermal examination of buried layers. *Canadian Journal Physics,* 1986, vol. 64, 1291-1292